# EUROPÄISCHE PATENTSCHRIFT

(11) **EP 0 966 619 B1**
(45) Veröffentlichungstag und Bekanntmachung des Hinweises auf die Patenterteilung: **05.06.2002**
(21) Anmeldenummer: 98905404.4
(22) Anmeldetag: 05.02.1998
(51) Int. Cl.: F16C 11/06, B23Q 1/32

(54) **WÄLZGELAGERTES GELENK**
JOINT MOUNTED ON ROLLING BEARINGS
ARTICULATION A ROULEMENTS

(30) Priorität: 15.03.1997 DE 19710866
(43) Veröffentlichungstag der Anmeldung: 29.12.1999
(73) Patentinhaber: INA Wälzlager Schaeffler oHG, 91072 Herzogenaurach (DE)
(72) Erfinder: LUNZ, Erich, D-91475 Lonnerstadt (DE)
(86) Internationale Anmeldenummer: EP9800613
(87) Internationale Veröffentlichungsnummer: WO9841773

(56) Entgegenhaltungen:
- DE-A- 19 617 880
- DE-C- 899 003
- US-A- 1 959 563
- US-A- 2 641 492

## Beschreibung

Die Erfindung betrifft ein Gelenk mit einem Bolzen, der ein Element trägt, das über eine Wälzlagerung schwenkbar in einem zugeordneten Gehäuse aufgenommen ist.

### Hintergrund der Erfindung

Ist das den Bolzen aufnehmende Element kugelförmig ausgebildet und schwenkbar in einer Kalotte aufgenommen, werden diese Gelenke als Kugelgelenke bezeichnet. Ein derartiges wälzgelagertes Kugelgelenk ist beispielsweise aus der US 29 71 770 A vorbekannt. Dieses Dokument zeigt ein Gelenk nach dem Oberbegriff des Anspruchs 1. Der Bolzen ist über ein Kugellager drehbar an der planen Unterseite des kugelförmigen Elementes befestigt und dieses ist mit seiner halbkugelförmigen Fläche über eine Vielzahl kleiner Lagerkugeln in einer kalottenförmigen Ausnehmung schwenkbar aufgenommen. Derartige Kugelgelenke finden im Bereich der Vorderradaufhängung von Automobilen Verwendung. Der Nachteil dieser wälzgelagerten Kugelgelenke liegt einerseits darin, daß aufgrund der punktförmigen Berührungen von kugelförmigem Element mit einer Vielzahl von kleinen Lagerkugeln hohe Hertz'sche Pressungen auftreten und andererseits diese Gelenke eine ungenügende Steifigkeit aufweisen.

Nun sind neben der Kraftfahrzeugindustrie aber auch Anwendungsfälle denkbar, in denen eine geringe Steifigkeit der Gelenke unerwünscht ist. Dies ist in der Werkzeugmaschinenbranche der Fall, wenn nach allen Seiten ausrichtbare Gelenke zur Positionierung von Werkzeugen eingesetzt werden. In diesem Fall sind Gelenke erforderlich, die ein Werkzeug punktgenau platzieren können.

### Zusammenfassung der Erfindung

Aufgabe der Erfindung ist es daher, ein wälzgelagertes Gelenk unter Vermeidung der Nachteile der bisherigen Kugelgelenke zu entwickeln, das aber zumindest deren Schwenkwinkel erreicht.

Erfindungsgemäß wird diese Aufgabe beim gattungsgemäßen Gelenk nach dem kennzeichnenden Teil von Anspruch 1 dadurch gelöst, daß das Mittelteil um 90° versetzt zur Drehachse des Innenteils an seiner Mantelfläche über Wälzlager um seine Drehachse drehbar in einem Gehäusekörper aufgenommen ist und der Gehäusekörper über eine an seiner Mantelfläche angeordnete Wälzlagerung um 90° zur Drehachse des Innenteils und zur Drehachse des Mittelteils versetzt in einem Flanschring um seine Drehachse drehbar gelagert ist, wobei die Drehachsen von Innenteil, Mittelteil und Gehäusekörper von einem gemeinsamen Punkt ausgehen.

Der mit der erfindungsgemäßen Ausgestaltung des Gelenks erzielbare technische Fortschritt ist insbesondere in seiner hohen Steifigkeit und der damit verbundenen hohen Positioniergenauigkeit zu sehen.

Die zwischen den einzelnen Bauteilen des Gelenkes vorgesehenen Wälzlager gewährleisten in vorteilhafter Weise einen vergleichsweise geringen Reibungswiderstand und damit einen geringen Verschwenkungswiderstand, wobei zumindest die Verschwenkbarkeit eines herkömmlichen Kugelgelenkes erreicht wird.

Weitere vorteilhafte Ausgestaltungen der Erfindung sind in den Unteransprüchen 2 bis 8 beschrieben.

So ist nach Anspruch 2 vorgesehen, daß das Mittelteil scheibenförmig ausgebildet ist und durch zwei gegenüberliegende Schrägnadellager in 0-Anordnung schwenkbar gelagert ist. Unter Schrägnadellager ist dabei zu verstehen, daß die Wirkrichtung der auf jeden Wälzkörper aufgebrachten Druckkraft sich schräg zur Längsachse des Bolzens erstreckt. Die verwendeten Nadellager garantieren aufgrund ihrer kurzen radialen Bauweise eine besonders platzsparende Raumanordnung.

In den Ansprüchen 3 und 4 ist die unterschiedliche Gestaltung des den Bolzen aufnehmenden Innenteils beschrieben. Dieses kann einmal scheibenförmig ausgebildet sein und durch zwei gegenüberliegende Schrägnadellager in X-Anordnung gelagert sein oder es ist kugelartig ausgebildet und durch zwei Schrägnadellager in 0-Anordnung gelagert.

Der Innenteil und Mittelteil aufnehmende Gehäusekörper ist nach Anspruch 5 im Flanschring entweder durch ein Kreuzrollenlager oder durch zwei gegenüberliegende Schrägnadellager in X-Anordnung drehbar gelagert. Beide Lagerarten stehen gleichberechtigt nebeneinander.

Nach einem weiteren Merkmal der Erfindung nach Anspruch 6 sollen die Wälzlager vorgespannt sein. Diese Vorspannung verhindert eine radiale Auslenkung der ineinander angeordneten Bauteile des Gelenkes, so daß eine besonders hohe Positioniergenauigkeit erreicht werden kann.

Aus Anspruch 7 geht hervor, daß Gehäusekörper, Mittelteil und Innenteil zweiteilig ausgebildet sein sollen und durch Befestigungsschrauben zu einer Einheit verbunden werden. Diese zweiteilige Ausbildung sichert den problemlosen Zusammenbau des wälzgelagerten Gelenks.

Schließlich ist nach Anspruch 8 vorgesehen, daß das wälzgelagerte Gelenk in Werkzeugmaschinen des Hexapod-Systems eingesetzt ist. Diese Werkzeugmaschinen einer neuen Generation sind dem Fachmann bekannt (vgl. DE 196 17 880 A) und bewegen im Gegensatz zu konventionellen Werkzeugmaschinen geringere Massen. Dies hat zur Folge, daß höhere Stellgeschwindigkeiten gefahren werden, wobei insbesondere die Steifigkeit zwischen Rahmen und Werkzeugaufnahme sehr hoch ist. Eine solche Werkzeugmaschine kann aus mehreren Armen bestehen, die einerseits an einem Rahmen und andererseits an einer Werkzeugaufnahme gelenkig befestigt sind. Dabei können die erfindungsgemäßen wälzgelagerten Gelenke in vorteilhafter Weise eingesetzt werden.

Die Erfindung wird an nachstehenden Ausführungsbeispielen näher erläutert.

### Kurze Beschreibung der Zeichnungen

Es zeigen:
- Figuren 1, 4 u. 5: einen Längsschnitt durch ein wälzgelagertes Gelenk entlang der Drehachse des Gehäusekörpers,
- Figuren 2 und 3: einen Schnitt entlang der Linie II-II bzw. III-III in Figur 1,
- Figuren 6 und 7: einen Schnitt entlang der Linie VI-VI bzw. VII-VII in Figur 5 und
- Figur 8: eine schematische Darstellung einer Werkzeugmaschine nach dem Hexapod-System.

### Ausführliche Beschreibung der Zeichungen

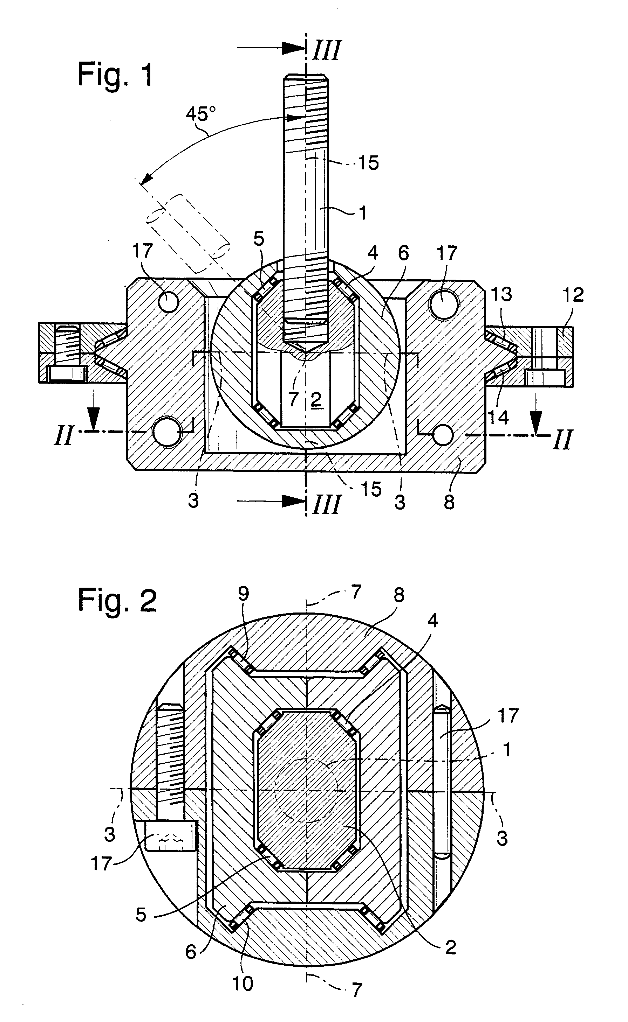

Das in den Figuren 1 bis 3 in verschiedenen Schnittdarstellungen gezeigte Gelenk besteht aus einem Bolzen 1, der von einem Innenteil 2 aufgenommen ist. Dieses Innenteil 2 ist scheibenförmig ausgebildet und nimmt den Bolzen 2 um 90° versetzt zu seiner Drehachse 3 auf. Die Mantelfläche des Innenteils fällt an ihren axial gegenüberliegenden Enden schräg nach außen ab, so daß zwei zur Drehachse 3 unter einem spitzen Winkel verlaufende Laufbahnen für zwei Schrägnadellager 4, 5 gebildet sind. Mit Hilfe dieser Schrägnadellager 4, 5 ist das Innenteil 2 mit dem Bolzen 1 schwenkbar in einem Mittelteil 6 angeordnet.

Das Innenteil 2 ist dabei durch die beiden Schrägnadellager 4, 5 in der X-Anordnung gehalten.

Das das Innenteil 2 aufnehmende Mittelteil 6 wiederum ist um 90° zur Drehachse 3 des Innenteils 2 versetzt um seine eigene Drehachse 7 in einem Gehäusekörper 8 schwenkbar angeordnet. Zu diesem Zweck ist das Mittelteil 6 an seiner Mantelfläche mit zwei zur Drehachse 7 unter einem spitzen Winkel nach innen abfallenden Laufbahnen versehen, an denen zwei Schrägnadellager 9, 10 abwälzen, die das Mittelteil 6 in 0-Anordnung halten. Das Mittelteil 6 ist in Richtung Bolzen 1 am oberen Ende mit einer Ausnehmung 11 versehen, die ein Verschwenken des Bolzens 1 innerhalb des Mittelteils 6 ermöglicht.

Der Gehäusekörper 8 ist in einem Flanschring 12 über zwei gegenüberliegende Schrägnadellager 13, 14 in X-Anordnung um seine Drehachse 15 drehbar gelagert. Dabei sind die einzelnen Bestandteile Innenteil 2, Mittelteil 6 und Gehäusekörper 8 so ineinander angeordnet, daß sich ihre Drehachsen 3, 7 und 15 in einem gemeinsamen Punkt schneiden, d. h. alle drei Lagermittelpunkte liegen im gleichen Punkt. Den genannten drei Figuren ist weiter entnehmbar, daß Mittelteil 6 und Gehäusekörper 8 zweiteilig ausgebildet sind und durch Befestigungsschrauben 16, 17 zu einer Einheit verbunden sind.

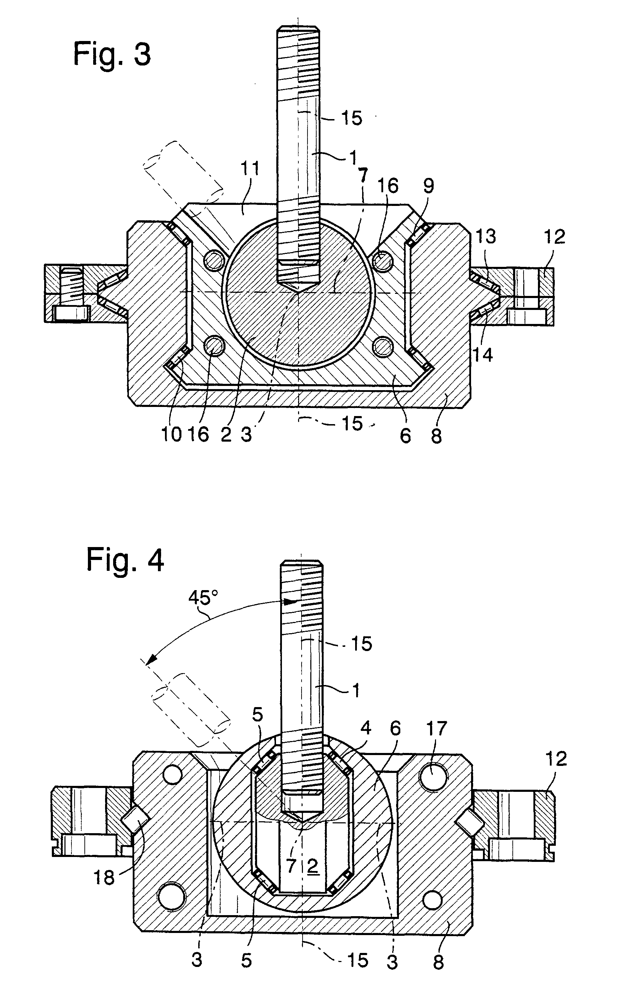

Der Unterschied zwischen Figur 1 und Figur 4 besteht darin, daß das in letztgenannter Figur gezeigte Gelenk im Flanschring 12 mit Hilfe eines Kreuzrollenlagers 18 gehalten ist. Durch diese dreifache Wälzlagerung des Gelenkes werden mit den beschriebenen Vorteilen der Wälzlagerung wie bei einem Kugelgelenk durch den Bolzen 1 sämtliche Stellungen auf einer zugehörigen Kugelkappe erreicht.

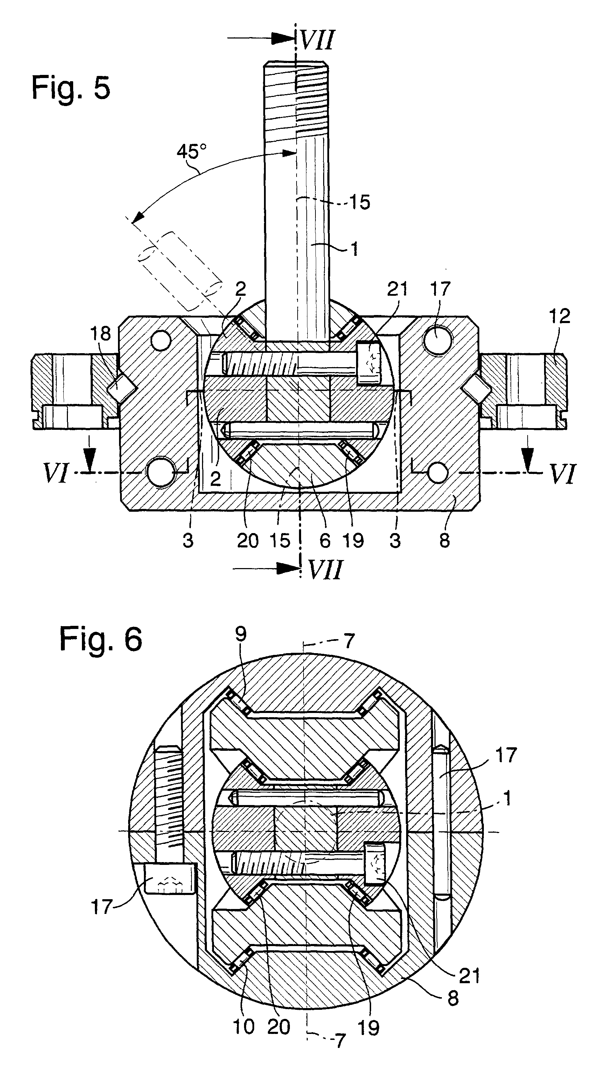

Das in den Figuren 5 bis 7 gezeigte Gelenk zeichnet sich dadurch aus, daß das aus zwei Teilen bestehende und durch Befestigungsschrauben 21 zusammengesetzte Innenteil 2 kugelartig ausgebildet ist und durch zwei Schrägnadellager 19, 20 in 0-Anordnung um seine Drehachse 3 schwenkbar im Mittelteil 6 gelagert ist.

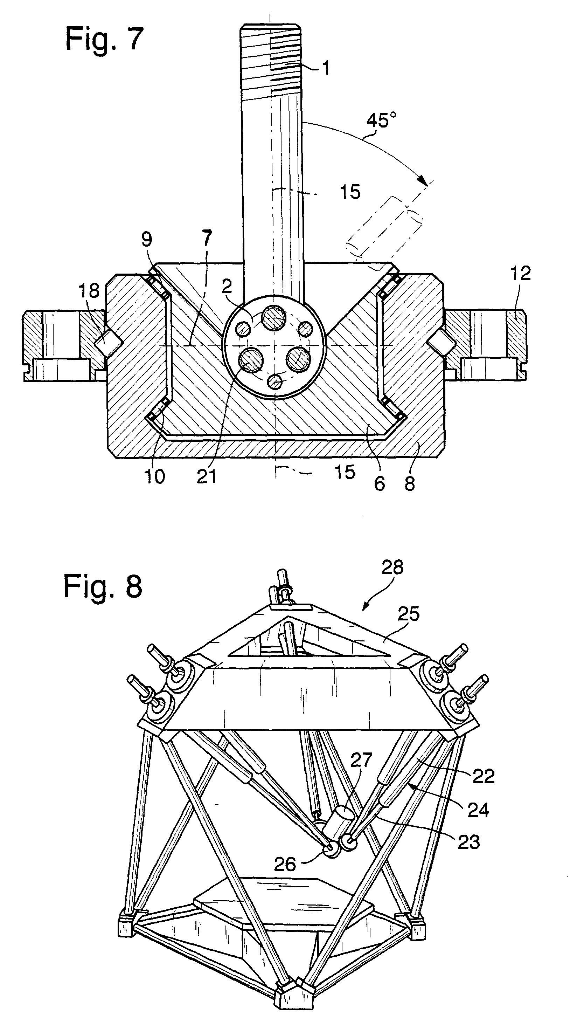

Die in Figur 8 abgebildete Werkzeugmaschine 28 ist mit mehreren je aus ineinander angeordneten Rohren 22, 23 gebildeten Teleskoparmen 24 versehen. Diese Teleskoparme 24 sind einerseits an einem Rahmen 25 und andererseits an einer Werkzeugaufnahme 26 gelenkig befestigt. Die Werkzeugaufnahme 26 ist mit einem nicht näher dargestellten Werkzeug versehen, das von einem Motor 27 angetrieben wird. Durch Ein- bzw. Ausfahren eines oder mehrerer Teleskoparme 24 läßt sich die Werkzeugaufnahme 26 in jeder gewünschten Position im Raum bewegen. Die erfindungsgemäßen Gelenke können bei der abgebildeten Werkzeugmaschine 28 sowohl am Rahmen 25 als auch an der Werkzeugaufnahme 26 in vorteilhafter Weise eingesetzt werden.

### Bezugszahlenliste

- 1: Bolzen
- 2: Innenteil
- 3: Drehachse
- 4: Schrägnadellager
- 5: Schrägnadellager
- 6: Mittelteil
- 7: Drehachse
- 8: Gehäusekörper
- 9: Schrägnadellager
- 10: Schrägnadellager
- 11: Ausnehmung
- 12: Flanschring
- 13: Schrägnadellager
- 14: Schrägnadellager
- 15: Drehachse
- 16: Befestigungsschraube bzw. -stift
- 17: Befestigungsschraube bzw. -stift
- 18: Kreuzrollenlager
- 19: Schrägnadellager
- 20: Schrägnadellager
- 21: Befestigungsschraube bzw. -stift
- 22: Rohr
- 23: Rohr
- 24: Teleskoparm
- 25: Rahmen
- 26: Werkzeugaufnahme
- 27: Motor
- 28: Werkzeugmaschine

## Patentansprüche

1. Gelenk mit einem Bolzen (1), der ein Element trägt, das über eine Wälzlagerung schwenkbar in einem zugeordneten Gehäuse aufgenommen ist, bei dem der Bolzen (1) von einem Innenteil (2) aufgenommen ist, dieses Innenteil (2) an seiner Mantelfläche über Wälzlager (4, 5, 19, 20) um seine Drehachse (3) drehbar in einem Mittelteil (6) aufgenommen ist, **dadurch gekennzeichnet, daß** das Mittelteil (6) um 90° versetzt zur Drehachse (3) des Innenteils (2) an seiner Mantelfläche über Wälzlager (9, 10) um seine Drehachse (7) drehbar in einem Gehäusekörper (8) aufgenommen ist und der Gehäusekörper (8) über eine an seiner Mantelfläche angeordnete Wälzlagerung (13, 14, 18) um 90° zur Drehachse (3) des Innenteils (2) und zur Drehachse (7) des Mittelteils (6) versetzt in einem Flanschring (12) um seine Drehachse (15) drehbar gelagert ist, wobei die Drehachsen (3, 7, 15) von Innenteil (2), Mittelteil (6) und Gehäusekörper (8) von einem gemeinsamen Punkt ausgehen (Figuren 1 bis 7).

2. Gelenk nach Anspruch 1, **dadurch gekennzeichnet, daß** das Mittelteil (6) scheibenförmig ausgebildet ist und durch zwei gegenüberliegende Schrägnadellager (9, 10) in 0-Anordnung schwenkbar gelagert ist (Figuren 2, 3, 6, 7).

3. Gelenk nach Anspruch 1, **dadurch gekennzeichnet, daß** das Innenteil (2) scheibenförmig ausgebildet ist und durch zwei gegenüberliegende Schrägnadellager (4, 5) in X-Anordnung schwenkbar gelagert ist (Figuren 1 und 2).

4. Gelenk nach Anspruch 1, **dadurch gekennzeichnet, daß** das Innenteil (2) kugelartig ausgebildet ist und durch zwei Schrägnadellager (19, 20) in 0-Anordnung schwenkbar gelagert ist (Figuren 5 und 6).

5. Gelenk nach Anspruch 1, **dadurch gekennzeichnet, daß** der Gehäusekörper (8) im Flanschring (12) durch ein Kreuzrollenlager (18) oder zwei gegenüberliegende Schrägnadellager (13, 14) in X-Anorndung drehbar gelagert ist (Figuren 1, 3, 5 und 7).

6. Gelenk nach Anspruch 1, **dadurch gekennzeichnet, daß** die Wälzlager (4, 5, 9, 10, 13, 14, 18, 19, 20) vorgespannt sind.

7. Gelenk nach Anspruch 1, **dadurch gekennzeichnet, daß** Gehäusekörper (8), Mittelteil (6) und Innenteil (2) zweiteilig ausgebildet sind und durch Befestigungsschrauben (17, 16, 21) zu einer Einheit verbunden sind (Figuren 1, 2, 3, 4, 5, 6).

8. Gelenk nach Anspruch 1, **dadurch gekennzeichnet, daß** es in Werkzeugmaschinen (28) des Hexapod-Systems eingesetzt ist (Figur 8).

## Claims

1. Joint having a bolt (1) which carries an element which is pivotally accommodated via a roller mounting in an associated housing, wherein the bolt (1) is received by an inner part (2), and this inner part (2) which is rotatable on its outer surface about its rotation axis (3) via roller bearings (4, 5, 19, 20) is received in a central part (6), **characterised in that** the central part (6), offset by 90° to the rotation axis (3) of the inner part (2), is accommodated in a housing body (8) so as to be rotatable on its outer surface about its rotation axis (7) via roller bearings (9, 10), and the housing body (8) is mounted in a flange ring (12) so as to be rotatable about its rotation axis (15) via a roller mounting (13, 14, 18) arranged on its outer surface, offset by 90° to the rotation axis (3) of the inner part (2) and to the rotation axis (7) of the central part (6), while the rotation axes (3, 7, 15) of the inner part (2), central part (6) and housing body (8) start from a common point (Figures 1 to 7).

2. Joint according to claim 1, **characterised in that** the central part is of disc-shaped construction and is pivotally mounted by means of two opposing oblique needle bearings (9, 10) in an O-shaped arrangement (Figures 2, 3, 6, 7).

3. Joint according to claim 1, **characterised in that** the inner part (2) is disc-shaped and pivotably mounted by means of two opposing oblique needle bearings (4, 5) in an X-shaped arrangement (Figures 1 and 2).

4. Joint according to claim 1, **characterised in that** the inner part (2) is spherical and pivotably mounted by means of two oblique needle bearings (19, 20) in an O-shaped arrangement (Figures 5 and 6).

5. Joint according to claim 1, **characterised in that** the housing body (8) is rotatably mounted in the flange ring (12) by means of a cross roller bearing (18) or by two opposing oblique needle bearings (13, 14) in an X-shaped arrangement (Figures 1, 3, 5 and 7).

6. Joint according to claim 1, **characterised in that** the roller bearings (4, 5, 9, 10, 13, 14, 18, 19, 20) are prestressed.

7. Joint according to claim 1, **characterised in that** the housing body (8), central part (6) and inner part (2) are made in two parts and joined together by fixing screws (17, 16, 21) to form a unit (Figures 1, 2, 3, 4, 5, 6).

8. Joint according to claim 1, **characterised in that** it is used in machine tools (28) of the Hexapod system (Figure 8).

## Revendications

1. Articulation à roulements comportant un goujon (1) qui porte un élément monté par un roulement de manière pivotante dans un boîtier correspondant, le goujon (1) étant porté par une partie intérieure (2) dont la surface enveloppe est montée par des roulements (4, 5, 19, 20) en rotation autour de son axe de rotation (3) dans une partie intermédiaire (6),
**caractérisée en ce que**
la partie intermédiaire (6) est montée à rotation autour de son axe de rotation (7) dans un corps de boîtier (8) par l'intermédiaire de sa surface enveloppe et de roulements (9, 10), de manière décalée de 90° par rapport à l'axe de rotation (3) de la partie intérieure (2), et
le corps de boîtier (8) est, par un montage à roulement (13, 14, 18) installé sur sa surface enveloppe, monté de manière décalée à 90° par rapport à l'axe de rotation (3) de la partie intérieure (2) et par rapport à l'axe de rotation (7) de la partie intermédiaire (6), à rotation autour de son axe de rotation (15), dans un anneau à bride (12),
les axes de rotation (3, 7, 15), la partie intérieure (2), la partie intermédiaire (6) du corps de boîtier (8) partent d'un point commun (figures 1 à 7).

2. Articulation à roulements selon la revendication 1,
**caractérisée en ce que**
la partie intermédiaire (6) est en forme de disque et elle est montée de manière pivotante selon un montage en O par deux roulements à aiguilles, coniques, opposés (9, 10) (figures 2, 3, 6, 7).

3. Articulation à roulements selon la revendication 1,
**caractérisée en ce que**
la partie intérieure (2) est en forme de disque et montée pivotante selon un montage en X par deux roulements à aiguilles, coniques opposés (4, 5) (figures 1 et 2).

4. Articulation à roulements selon la revendication 1,
**caractérisée en ce que**
la partie intérieure (2) est en forme de sphère montée par deux paliers à aiguilles, coniques (19, 20) de manière pivotante selon un montage en O (figures 5 et 6).

5. Articulation à roulements selon la revendication 1,
**caractérisée en ce que**
le corps de boîtier (8) est monté dans un anneau à bride (12) par l'intermédiaire d'un palier à galets croisés (18) ou deux roulements à aiguilles, coniques (13, 14), opposés, à rotation selon un montage en X (figures 1, 3, 5 et 7).

6. Articulation à roulements selon la revendication 1,
**caractérisée en ce que**
les roulements (4, 5, 9, 10, 13, 14, 18, 19, 20) sont précontraints.

7. Articulation à roulements selon la revendication 1,
**caractérisée en ce que**
le corps de boîtier (8), à partie intermédiaire (6) et la partie intérieure (2) sont réalisées en deux parties et sont réunies en un ensemble par des vis de fixation (17, 16, 21) (figures 1, 2, 3, 4, 5, 6).

8. Articulation à roulements selon la revendication 1,
**caractérisée en ce qu'**
elle est appliquée à des machines outils (28) dans un système hexapode (figure 8).
